(19) Europäisches Patentamt

European Patent Office

Office européen des brevets

(11) **EP 0 717 373 B1**

(12) **EUROPEAN PATENT SPECIFICATION**

(45) Date of publication and mention
of the grant of the patent:
**07.11.2001 Bulletin 2001/45**

(51) Int Cl.⁷: **G06T 15/10**

(21) Application number: **95119397.8**

(22) Date of filing: **08.12.1995**

(54) **Method of converting two-dimensional images into three-dimensional images in a video game set**

Verfahren zur Umsetzung zweidimensionaler Bilder in dreidimensionale Bilder in einer Videospielkonsole

Méthode pour convertir des images bi-dimensionnelles en images tri-dimensionnelles dans une console de jeu vidéo

| | |
|---|---|
| (84) Designated Contracting States:<br>**DE FR GB** | (56) References cited:<br>**GB-A- 2 146 877** |
| (30) Priority: **15.12.1994 JP 31198094**<br>**26.12.1994 JP 32303994** | • **EUROGRAPHICS TECHNICAL REPORT SERIES, 1991, AMSTERDAM, pages 1-17, XP000243006 HIBBARD E.A.: "ON THE THEORY AND APPLICATION OF STEREOGRAPHICS IN SCIENTIFIC VISUALIZATION"** |
| (43) Date of publication of application:<br>**19.06.1996 Bulletin 1996/25** | • **PROCEEDINGS OF THE SPIE, vol. 2177, 8 - 10 February 1994, NEW-YORK U.S., pages 78-85, XP002003951 HOBERMAN: "DEPTH PAINTING: THE INTERACTIVE TRANSFORMATION OF EXISTING IMAGES INTO STEREOSCOPIC 3D"** |
| (73) Proprietor: **SANYO ELECTRIC CO. LTD**<br>**Moriguchi-City, Osaka 570 (JP)** | • **JOURNAL OF COMPUTERS IN MATHEMATICS AND SCIENCE TEACHING, vol. 6, no. 2, January 1986, USA, pages 15-22, XP002003952 BOYER: "CONSTRUCTING TRUE STEREOGRAMS ON THE MACINTOSH"** |
| (72) Inventors:<br> • **Uwa, Nobuaki**<br> **Akashi-City, Hyogo 674 (JP)**<br> • **Taima, Kenji**<br> **Moriguchi-City, Osaka 570 (JP)**<br> • **Yamada, Teruhiro**<br> **Hirakata-City, Osaka 573 (JP)** | |
| (74) Representative: **Glawe, Delfs, Moll & Partner**<br>**Patentanwälte**<br>**Postfach 26 01 62**<br>**80058 München (DE)** | |

EP 0 717 373 B1

## Description

Field of the Invention

The present invention relates to a method of converting two-dimensional (2D) images into three-dimensional (3D) images in a video game set.

Description of the Prior Art

In a video game set, characters, a background and the like appearing in a game are respectively drawn on separate sprite surfaces, and a plurality of sprite images drawn on the sprite surfaces are displayed with they being overlapped with each other.

There is a front-and-rear positional relationship among the respective sprite images. However, an image obtained from each of the sprite images is a 2D image, which is not a 3D image. Therefore, it lacks an impressive effect.

A method of producing from a 2D image a main image and an image delayed from the main image by a predetermined number of fields to convert the 2D image into a 3D image has been already developed. In this method, however, an image which does not horizontally move is not a 3D image. Further, in this method, when the direction of the movement of a subject cannot be accurately detected, such a 3D image that a subject to be positioned on the rear side is projected forward from a subject to be positioned on the front side may be produced.

GB-A-2 146 877 discloses a method of producing three-dimensional images, for example in a video game set having a 3D display for separately viewing left and right eye images. The method comprises producing left and right eye images of a two-dimensional object, the phases of both the images being shifted from each other in the horizontal direction by a calculated amount of horizontal phase shift. The amount of phase shift is responsive to control inputs by which the user controls the apparent depth position of the object, said control inputs being effective to change both the horizontal phase shift and the size of the left and right eye images so as to create the impression of an object moving along the depth coordinate. This method relies on a system, which permits to dynamically change an inputted and/or programmed control information relating to the intended or assumed depth position or depth-movement of the displayed object. This known method is therefore not applicable in existing, purely two-dimensional, sprite-based video games in which the display of the sprite images is controlled only on the basis of priorities for display assigned to the sprite images.

An object of the present invention is to provide a method of converting 2D images into 3D images in a video game set, in which a 2D image provided by a video game set can be converted into a 3D image.

Another object of the present invention is to provide a method of converting 2D images into 3D images in a video game set, in which the front-and-rear positional relationship among subjects can be correctly represented.

A method of converting 2D images into 3D images in a video game set according to the present invention is characterized by comprising the steps of calculating the amount of horizontal phase shift of a sprite image to be displayed on the basis of information relating to the priority for display assigned to the sprite image, and producing from the sprite image a left eye sprite image and a right eye sprite image whose phases are shifted from each other in the horizontal direction, the amounts of horizontal phase shift of both the images corresponding to the calculated amount of phase shift.

When a sprite image so displayed as to be positioned on a monitor surface out of sprite images is taken as a reference sprite image, a left eye sprite image whose phase is not shifted and a right eye sprite image whose phase is shifted leftward are produced with respect to the reference sprite image. With respect to the sprite images assigned higher priorities for display than that assigned to the reference sprite image, the amount of phase shift is so calculated that the higher the priority for display assigned to one of the sprite images is, the larger the amount of phase shift of the sprite image is, and a left eye sprite image whose phase is shifted rightward and a right eye sprite image whose phase is shifted leftward are produced on the basis of the calculated amount of phase shift for each image. With respect to the sprite images assigned lower priorities for display than that assigned to the reference sprite image, the amount of phase shift is so calculated that the higher the priority for display assigned to one of the sprite images is, the smaller the amount of phase shift of the sprite image is, and a left eye sprite image whose phase is shifted leftward and a right eye sprite image whose phase is shifted rightward are produced on the basis of the calculated amount of phase shift for each image.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a typical diagram showing an image provided by a conventional video game set;

Fig. 2 is a typical diagram showing the priorities for display assigned to sprite images;

Fig. 3 is a block diagram showing the construction of a video game set for carrying out a method according to the present invention;

Fig. 4 is a explanatory view for explaining the contents of processing by a VDP;

Fig. 5 is a diagram showing the construction of a 3D display;

Fig. 6 is a typical diagram showing the construction of an image displayed on a liquid crystal panel of a 3D display;

Fig. 7 is a block diagram showing the construction of another video game set for carrying out a method according to the present invention;

Fig. 8 is a typical diagram showing the original sprite image, and a left eye sprite image and a right eye sprite image which are produced by a sprite controller; and

Fig. 9 is a typical diagram showing the original image, and a left eye image and a right eye image which are supplied to a 3D display.

DETAILED DESCRIPTION OF THE PREFERRED EMBODIMENTS

Referring now to the drawings, embodiments of the present invention will be described.

(1) Description of First Embodiment

A first embodiment is directed to converting a 2D image provided by video game software into a 3D image without changing the hardware configuration of the existing video game set as much as possible.

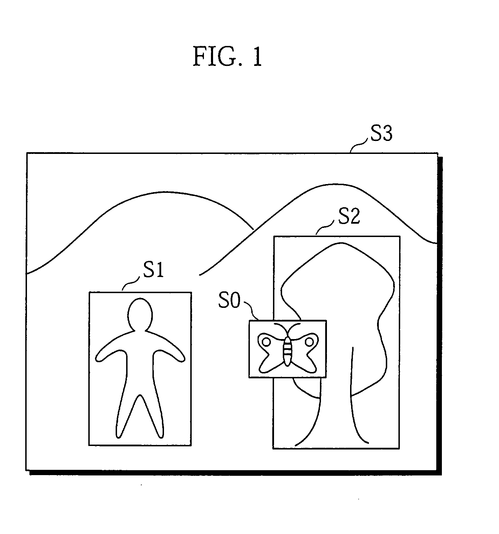

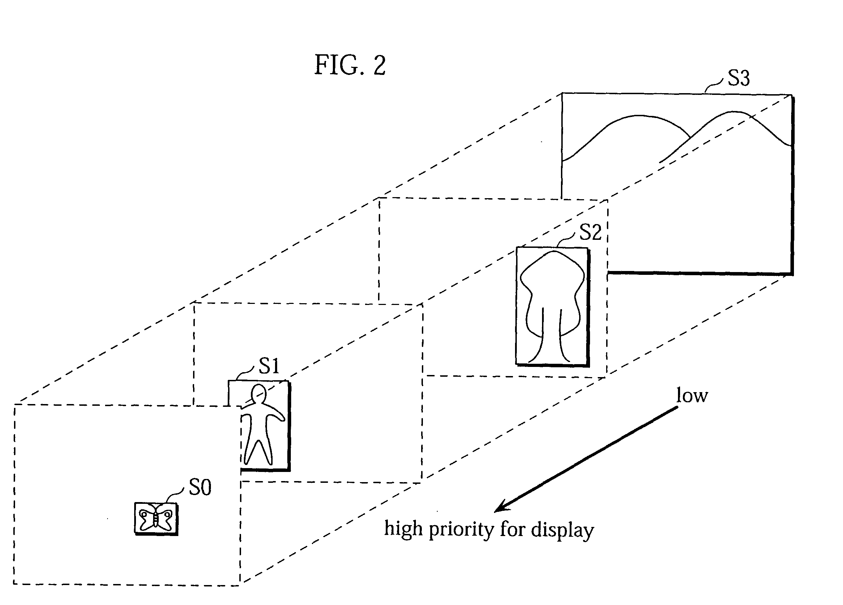

Fig. 1 illustrates an image displayed by the existing video game set. In this image, a butterfly, a person and a tree exist as characters which move, and mountains exist as a background which does not move. The characters are respectively drawn on sprite surfaces S0, S1 and S2 in which the characters are contained, as shown in Fig. 2. The mountains which are a background are drawn on a sprite surface (a background graphics surface) S3.

There are a case where the priorities for display assigned to the respective sprite surfaces S0, S1, S2 and S3 are fixedly determined and a case where they are changed with the progress of a game. The higher the priority for display assigned to a sprite surface out of the sprite surfaces S0, S1, S2 and S3 is, the forwarder the sprite surface is positioned. Only the sprite surface assigned the higher priority for display appears in a portion where the sprite surfaces are overlapped with each other. The background graphics surface (the sprite surface S3) is always assigned the lowest priority for display.

In an example shown in Figs. 1 and 2, the sprite surfaces, listed in the order of descending priorities for display, are the sprite surface S0 on which a butterfly is drawn, the sprite surface S1 on which a person is drawn, the sprite surface S2 on which a tree is drawn, and the sprite surface S3 on which a background is drawn.

In the present embodiment, a left eye image and a right eye image between which there is no parallax are produced with respect to an image so displayed as to exist on a monitor surface (hereinafter referred to as a reference sprite image) out of images drawn on the sprite surfaces S0, S1, S2 and S3 (hereinafter referred to as sprite images). In addition, a left eye image and a right eye image between which there is parallax are produced from each of the sprite images other than the reference sprite image. That is, a left eye image and a right eye image whose phases are shifted from each other in the horizontal direction are produced from each of the sprite images other than the reference sprite image.

Furthermore, the amount of parallax (the amount of horizontal phase shift) is determined on the basis of information relating to the priority for display assigned to each of the sprite surfaces S0, S1, S2 and S3, thereby to accurately represent the front-and-rear positional relationship among the sprite surfaces.

For example, suppose a case where the sprite surface S3 on which a background image is drawn (the background graphics surface) is set on the monitor surface, and a character image drawn on each of the sprite surfaces S0, S1 and S2 assigned higher priorities than that assigned to the sprite surface S3 are projected forward from the monitor surface. The sprite surface set on the monitor surface shall be a reference sprite surface. In such a case, a left eye image and a right eye image between which there is no parallax are produced with respect to the background image drawn on the reference sprite surface S3. In addition, a left eye image whose phase is shifted rightward and a right eye image whose phase is shifted leftward are produced from each of the character images drawn on the sprite surfaces S0, S1 and S2 other than the reference sprite surface S3. When the left eye image is viewed only by the left eye and the right eye image is viewed only by the right eye using a 3D display, it seems as if the background image drawn on the reference sprite surface S3 exists on the monitor surface, and the character images drawn on the other sprite surfaces S0, S1 and S2 exist in positions ahead of the monitor surface. In addition, the higher the priority for display assigned to a character image is, the larger the amount of horizontal phase shift between a left eye image and a right eye image is made, whereby the higher the priority for display assigned to the character image is, the larger the amount of projection from the monitor surface of the character image becomes.

The sprite images drawn on the other sprite surfaces S1, S2 and S3 may be recessed backward from the monitor surface with the sprite surface S0 assigned the highest priority for display taken as a reference sprite surface. In such a case, a left eye image and a right eye image between which there is no phase difference are produced from the character image drawn on the sprite surface assigned the highest priority for display (the reference sprite surface) S0. A left eye image whose phase is shifted leftward and a right eye image whose phase is shifted rightward are produced from each of the sprite images (the character images and the background image) drawn on the other sprite surfaces S1, S2 and S3.

When the left eye image is viewed only by the left eye and the right eye image is viewed by only the right eye using the 3D display, it seems as if the character image drawn on the reference sprite surface S0 is positioned on the monitor surface and the sprite images (the character images and the background image) drawn on the other sprite surfaces S1, S2 and S3 exist in positions behind the monitor surface. Among the sprite surfaces S1, S2 and S3 other than the reference sprite surface S0, the lower the priority for display assigned to a sprite image is, the larger the amount of horizontal phase shift between a left eye image and a right eye image is made, whereby the lower the priority for display assigned to the sprite image is, the larger the amount of recession from the monitor surface of the sprite image becomes.

Furthermore, particular one of the sprite surfaces assigned the second and later priorities, for example, the sprite surface S1 may be taken as a reference sprite surface, to project the character image drawn on the sprite surface S0 assigned the higher priority for display than that assigned to the reference sprite surface S1 forward from the monitor surface, while recessing the sprite images (the character image and the background image) drawn on the sprite surfaces S2 and S3 assigned the lower priorities for display than that assigned to the reference sprite surface S1 backward from the monitor surface.

In such a case, a left eye image and a right eye image between which there is no phase difference are produced from the character image drawn on the reference sprite surface. A left eye image whose phase is shifted rightward and a right eye image whose phase is shifted leftward are produced from the character image drawn on the sprite surface S0 assigned the higher priority for display than that assigned to the reference sprite surface S1. A left eye image whose phase is shifted leftward and a right eye image whose phase is shifted rightward are produced from each of the sprite images drawn on the sprite surfaces S2 and S3 assigned the lower priorities for display than that assigned to the reference sprite surface S1.

When the left eye image is viewed only by the left eye and the right eye image is viewed only by the right eye using the 3D display, it seems as if the character image drawn on the reference sprite surface S1 is positioned on the monitor surface. In addition, it seems as if the character image drawn on the sprite surface S0 assigned the higher priority for display than that assigned to the reference sprite surface S1 exists in a position ahead of the monitor surface. Further, it seems as if the sprite images drawn on the sprite surfaces S2 and S3 (the character image and the background image) assigned the lower priorities for display than that assigned to the reference sprite surface S1 exist in positions behind the monitor surface.

Among the sprite surfaces assigned the higher priorities for display than that assigned to the reference sprite surface, the higher the priority for display assigned to a sprite image is, the larger the amount of horizontal phase shift between a left eye image and a right eye image is made, whereby the higher the priority for display assigned to the sprite image is, the larger the amount of projection from the monitor surface of the sprite image becomes. Among the sprite surfaces assigned the lower priorities for display than that assigned to the reference sprite surface and the background graphics surface, the lower the priority for display assigned to a sprite image is, the larger the amount of horizontal phase shift between a left eye image and a right eye image is made, whereby the lower the priority for display assigned to the sprite image is, the larger the amount of recession from the monitor surface assigned to the sprite image becomes.

In the following, description is made of a case where the character images drawn on the sprite surfaces S0, S1 and S2 are projected forward with the sprite surface on which a background is drawn (the background graphics surface) S3 taken as a reference sprite surface.

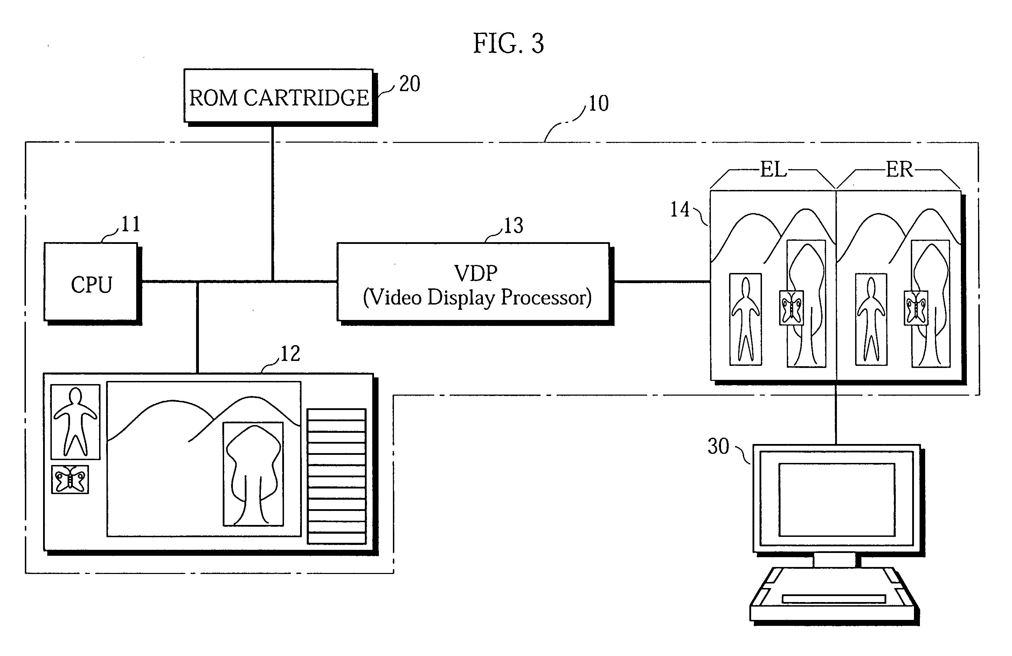

Fig. 3 illustrates the construction of a video game set according to a first embodiment.

The video game set comprises a game set body (a game processor) 10, a ROM (Read-Only Memory) cartridge 20 connected to the game processor 10 through a connector (not shown), and a 3D display 30 connected to the game processor 10.

The game processor 10 comprises a CPU (Central Processing Unit) 11. The CPU 11 controls the entire operation of a video game. The ROM cartridge 20 stores programs of the CPU 11 and images such as character images and a background image which are displayed on the 3D display 30.

The game processor 10 is provided with a RAM (Random Access Memory) 12 for storing the programs and the images which are read out from the ROM cartridge 20, a VDP (Video Display Processor) 13 for performing required processing with respect to image data in the RAM 12, and a VRAM (Video Random Access Memory) 14 in addition to the CPU 11. The left half of the VRAM 14 is taken as a left eye image storage area EL, and the right half thereof is taken as a right eye image storage area ER, as shown in Fig. 3. When the size of one screen is 640 x 480, the size of each of the left eye image storage area EL and the right eye image storage area ER is 320 x 480.

Before the game is started, a drawing routine for 2D/3D image conversion used in place of a drawing routine in the programs stored in the ROM cartridge 20 is stored in the RAM 12. The drawing routine for 2D/3D image conversion is executed by mounting a dedicated ROM cartridge storing the drawing routine on the connector, and then transferring the drawing routine to the RAM 12. Alternatively, the game processor 10 may be provided with a ROM storing the drawing routine for 2D/3D image conversion so that the drawing routine for 2D/3D image conversion is transferred to the RAM 12 from the ROM before starting the game.

When the ROM cartridge 20 is mounted on the connector in a state where the drawing routine for 2D/3D image conversion is stored in the RAM 12, the programs and the images which are stored in the ROM cartridge 20 are transferred to the RAM 12.

The game is started on the basis of the programs transferred to the RAM 12 and the drawing routine for 2D/3D image conversion. When the game is started, the background image to be displayed is read out from the RAM 12 and is sent to the VDP 13, and the character image to be displayed other than the background image, along with information relating to the priority for display assigned to the character image, is read out from the RAM 12 and is sent to the VDP 13.

In the VDP 13, the following processing is performed by a command from the CPU 11 conforming to the drawing routine for 2D/3D image conversion.

In this example, it is assumed that a left eye image and a right eye image between which there is no parallax are produced with respect to the background image, and a left eye image and a right eye image between which there is parallax conforming to the priority for display assigned to each of the character images are produced with respect to the character image.

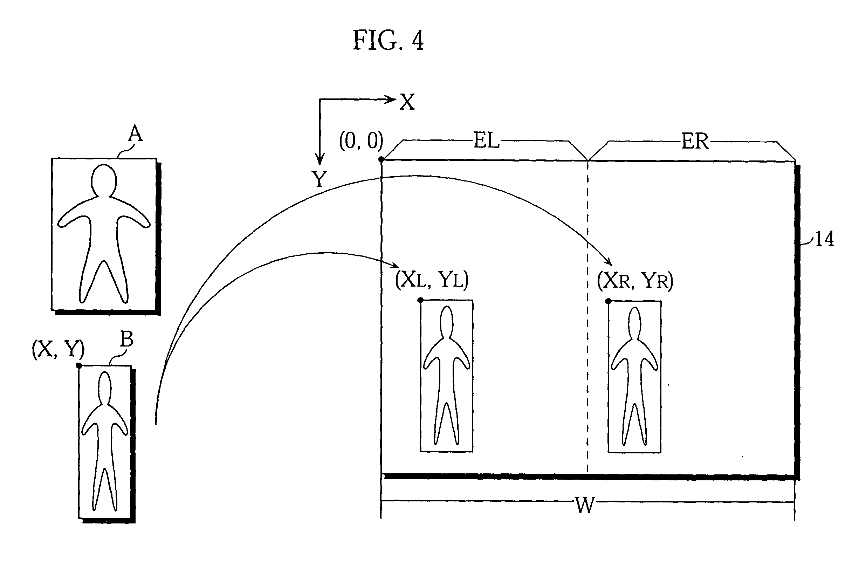

When the image sent to the VDP 13 is a character image, the character image A is converted into an image whose resolution in the horizontal direction is one-half that of the character image A (hereinafter referred to as a sampling image B) by sampling processing, as shown in Fig. 4. In addition, the position $(X_L, Y_L)$ where the sampling image B is written into the left eye image storage area EL of the VRAM 14 and the position $(X_R, Y_R)$ where the sampling image B is written into the right eye image storage area ER of the VRAM 14 are respectively calculated on the basis of information relating to the priority for display assigned to the character image A. As shown in Fig. 4, the sampling image B is written into the calculated position $(X_L, Y_L)$ where the sampling image B is written into the left eye image storage area EL and the calculated position $(X_R, Y_R)$ where the sampling image B is written into the right eye image storage area ER.

As shown in Fig. 4, suppose an XY coordinate system with the upper left of the VRAM 14 taken as the origin. The sum of the width of the left eye image storage area EL and the width of the right eye image storage area ER of the VRAM 14 is taken as W. In addition, the amount of horizontal phase shift of the character image which is determined on the basis of information relating to the priority for display assigned to the character image is taken as ΔH. The amount of horizontal phase shift ΔH is determined on the basis of the monitor surface. When a sprite surface on which a background is drawn (a graphics surface) is the monitor surface, the amount of horizontal phase shift ΔH is so determined that the higher the priority for display assigned to a character image is, the larger the amount of horizontal phase shift ΔH of the character image becomes.

The position $(X_L, Y_L)$ where the sampling image B is written into the left eye image storage area EL of the VRAM 14 and the position $(X_R, Y_R)$ where the sampling image B is written into the right eye image storage area ER of the VRAM 14 are calculated by the following equations (1):

$$X_L = X / 2 + \Delta H$$

$$Y_L = Y$$

$$X_R = X / 2 - \Delta H + W / 2$$

$$Y_R = Y \qquad (1)$$

When the character image A is thus written into the left eye image storage area EL and the right eye image storage area ER of the VRAM 14, a left eye image produced on the basis of the character image A becomes an image which is moved by ΔH rightward from the sampling image B of the character image A. In addition, a right eye image produced on the basis of the character image A becomes an image which is moved by ΔH leftward from the sampling image B of the character image A.

When the image sent to the VDP 13 is a background image, the background image is converted into an image whose resolution in the horizontal direction is one-half that of the background image (hereinafter referred to as a sampling image) by sampling processing. In addition, the position where the sampling image is written into the left eye image storage area EL of the VRAM 14 and the position where the sampling image is written into the right eye image storage area ER of the VRAM 14 are respectively calculated. The sampling image is written into the calculated position where the sampling image is written into the left eye image storage area EL and the calculated position where the sampling image is written into the right eye image storage area ER.

The position $(X_L, Y_L)$ where the sampling image of the background image is written into the left eye image storage area EL of the VRAM 14 and the position $(X_R, Y_R)$ where the sampling image of the background image is written into the right eye image storage area ER of the VRAM 14 are calculated by the following equations (2):

$$X_L = X / 2$$

$$Y_L = Y$$

$$X_R = X / 2 + W / 2$$

$$Y_R = Y \qquad (2)$$

Specifically, in the case of the background image, a left eye image and a right eye image become images whose phases are not shifted.

An image corresponding to one frame comprising the left eye image and the right eye image which are thus obtained is supplied to the 3D display 30.

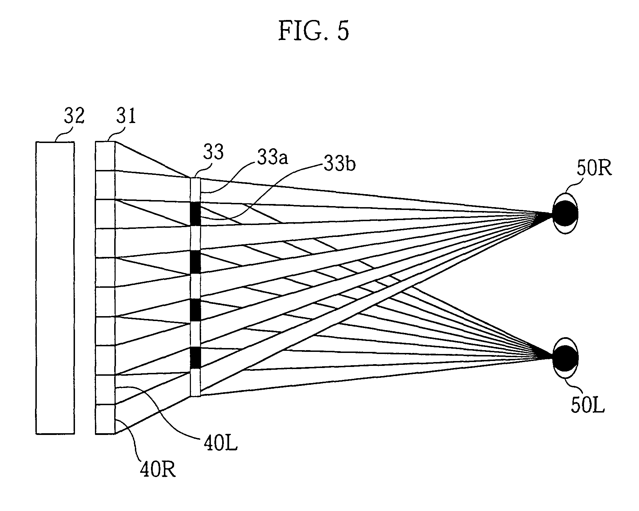

Fig. 5 illustrates the construction of the 3D display.

The 3D display 30 comprises a liquid crystal panel 31. A back-light 32 is arranged on the side of the rear surface of the liquid crystal panel 31. A parallax barrier 33 having apertures 33a and barriers 33b alternately arranged in the horizontal direction therein is disposed ahead of the liquid crystal panel 31.

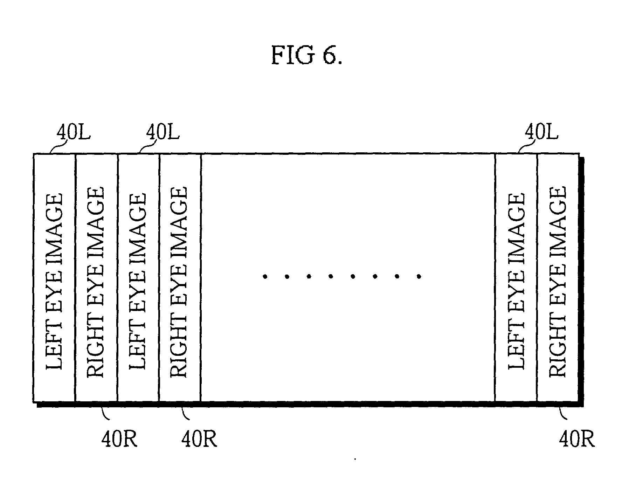

The 3D display 30 divides the left eye image and the right eye image which are sent into lengthwise strip-shaped images. Strip-shaped left eye images 40L and strip-shaped right eye images 40R are alternately arranged in the horizontal direction and are displayed on the liquid crystal panel 31, as shown in Fig. 6. A viewer views the image on the liquid crystal panel 31 through the parallax barrier 33, so that only the strip-shaped left eye images 40L are viewed by the left eye 50L, and only the strip-shaped right eye images 40R are viewed by the right eye 50R.

As a result, each of the character images is so viewed that it is projected forward from a background surface. In addition, the higher the priority for display assigned to each of the character images is, the larger the amount of projection of the character image is.

The ROM cartridge may, in some cases, store not a character image itself drawn on the sprite surface but shape information for drawing the character image on the sprite surface by rendering processing. In such a case, in the VDP 13, the rendering processing is performed on the basis of the sent shape information to produce a character image, after which a left eye image and a right eye image between which there is parallax conforming to the priority for display assigned to the character image are produced.

The present invention is also applicable to a game processor on which a CD-ROM is mounted in place of the ROM cartridge.

(2) Second Embodiment

A second embodiment is directed to converting a 2D image provided by video game software into a 3D image using a video game set having a hardware configuration which differs from the hardware configuration of the existing video game set.

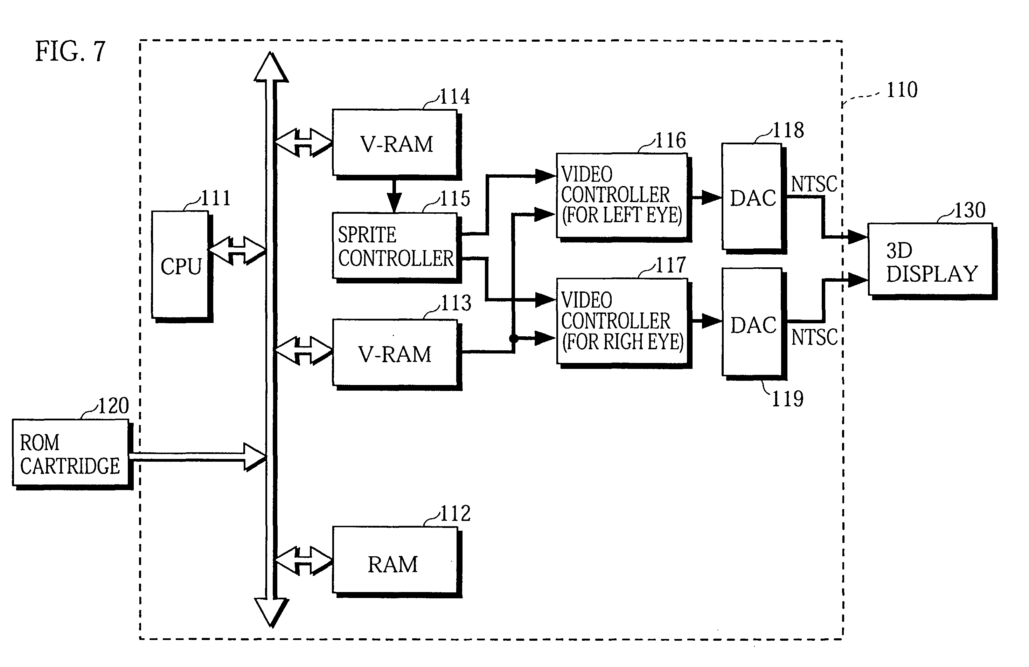

Fig. 7 illustrates the construction of a video game set according to the second embodiment.

The video game set comprises a game set body (game processor) 110, a ROM cartridge 120 mounted on the game processor 110 through a connector (not shown), and a 3D display 130 connected to the game processor 110.

The game processor 110 comprises a CPU 111. The CPU 111 controls the entire operation of a video game. The ROM cartridge 120 stores programs of the CPU 111 as well as images such as character images and a background image which are displayed on the 3D display 130.

The game processor 110 comprises a RAM 112, a first VRAM 113, a second VRAM 114, a sprite controller 115, a video controller for left eye 116, a video controller for right eye 117, a digital-to-analog (D/A) converter 118, and a D/A converter 119.

When the power supply is turned on after the ROM cartridge 120 is mounted on the game processor 110, the programs and the images are read out from the ROM cartridge 120. The programs read out from the ROM cartridge 120 are transferred to the RAM 112.

The images read out from the ROM cartridge 120 include an image of a background which does not move (hereinafter referred to as a background image) and a character image which moves. The background image read out from the ROM cartridge 120 is transferred to the first VRAM 113. The character image read out from the ROM cartridge 120 is transferred to the second VRAM 114.

The character image to be displayed on the sprite controller 115 is sent from the second VRAM 114 in accordance with the programs stored in the RAM 112. In this case, information relating to the priority for display assigned to the character image is also sent to the sprite controller 115.

The sprite controller 115 first calculates the amount of horizontal phase shift conforming to binocular parallax on the basis of the priority for display assigned to the sent character image. A left eye character image and a right eye character image whose horizontal phases are shifted from each other are produced from the sent character image on the basis of the calculated amount of horizontal phase shift. The produced left eye character image and the produced right eye character image are respectively supplied to the video controller for left eye 116 and the video controller for right eye 117.

The background image is also sent from the first VRAM 113 to the video controller for left eye 116. The video controller for left eye 116 synthesizes the sent background image and the left eye character image, to produce a left eye image signal (a digital NTSC (National Television System Committee) signal). The produced left eye image signal is converted into an analog NTSC signal by the D/A converter 118, after which the analog NTSC signal is sent to the 3D display 130.

The background image is also sent to the video controller for right eye 117 from the first VRAM 113. The video controller for right eye 117 synthesizes the sent background image and the right eye character image, to produce a right eye image signal (a digital NTSC signal). The produced right eye image signal is converted into an analog NTSC signal by the D/A converter 119, after which the analog NTSC signal is sent to the 3D display 130.

A 3D display simultaneously using liquid crystal shutter glasses, for example, is used as the 3D display 130. In such a 3D display 130, a left eye image and a right eye image are alternately switched and displayed. The liquid crystal shutter glasses are so controlled that the left eye image does not enter the right eye when the left eye image is displayed and the right eye image does not enter the left eye when the right eye image is displayed.

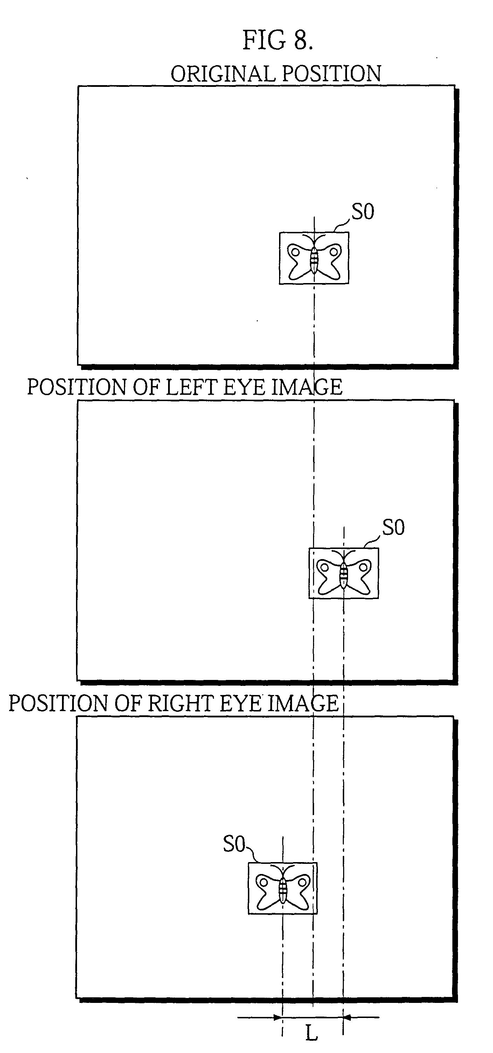

Fig. 8 illustrates the original image of a character image of a butterfly shown in Fig. 1, and a left eye character image and a right eye character image which are produced by the sprite controller 115. The left eye character image is shifted rightward from the original image. On the other hand, the right eye character image is shifted leftward from the original image. When the left eye character image is viewed only by the left eye and the right eye character image is viewed by only the right eye, binocular parallax occurs by the distance L in the horizontal direction between both the images, whereby it seems as if the character image is projected forward from a monitor surface (a sprite surface on which a background is drawn). The higher the priority for display assigned to the character image is, the distance in the horizontal direction L (the amount of horizontal phase shift) of the character image is made. Consequently, the higher the priority for display assigned to the character image is, the larger the amount of projection from the monitor surface of the character image becomes.

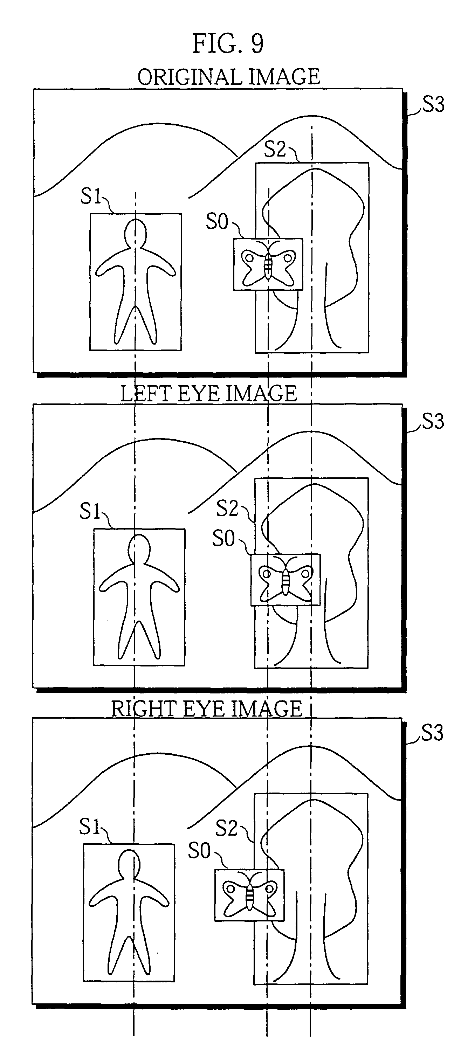

Fig. 9 illustrates the original image, and a left eye image and a right eye image which are supplied to the 3D display 130. In this example, images, listed in the order of descending priorities, are a butterfly, a person and a tree. As shown in Fig. 9, the higher the priority for display assigned to each of the character images is, the larger the distance in the horizontal direction of the character image (the amount of horizontal phase shift) between the left eye image and the right eye image is made.

Although the present invention has been described and illustrated in detail, it is clearly understood that the same is by way of illustration and example only and is not to be taken by way of limitation, the scope of the present invention being limited only by the terms of the appended claims.

## Claims

1. A method of converting two-dimensional images of an originally two-dimensional video game into three-dimensional images in a video game set (10) comprising a 3D display (30) for viewing left and right eye images, the method comprising the steps of:

   calculating an amount of horizontal phase shift ΔH of a two-dimensional sprite image (A) provided by the original video game software, the sprite image having a priority for display but no depth coordinate assigned thereto;

   and producing from the sprite image (A) a left eye sprite image and a right eye sprite image whose phases are shifted from each other in the horizontal direction, the amounts of horizontal phase shift of both the images corresponding to the calculated amount of phase shift ΔH, wherein

   said amount of horizontal phase shift ΔH is calculated exclusively on the basis of the priority for display assigned to the sprite image (A).

## Patentansprüche

1. Verfahren zum Umsetzen von zweidimensionalen Bildern eines ursprünglich zweidimensionalen Videospiels in dreidimensionale Bilder in einer Videospielkonsole (10) mit einer 3D-Anzeige (30) zum Betrachten von Bildern für das linke und rechte Auge, wobei das Verfahren die folgenden Schritte umfaßt:

   Berechnen eines Betrages einer horizontalen Phasenverschiebung ΔH eines zweidimensionalen Sprite-Bildes (A), das von der ursprünglichen Videosoftware geliefert wird, wobei dem Sprite-Bild eine Anzeigepriorität, aber keine Tiefenkoordinate zugeordnet ist;
   und Erzeugen, aus dem Sprite-Bild (A), eines Sprite-Bildes für das linke Auge und eines Sprite-Bildes für das rechte Auge, deren Phasen gegeneinander in Horizontalrichtung verschoben sind, wobei die Beträge der horizontalen Phasenverschiebung der beiden Bilder dem berechneten Betrag der Phasenverschiebung ΔH entsprechen, wobei der Betrag der horizontalen Phasenverschiebung ΔH ausschließlich auf der Basis der dem Sprite-Bild (A) zugeordneten Anzeigepriorität berechnet wird.

## Revendications

1. Procédé de conversion d'images bidimensionnelles d'un jeu vidéo à l'origine en deux dimensions en images tridimensionnelles dans un poste de jeu vidéo (10) en trois dimensions comprenant un affichage en 3D (30) pour des images de l'oeil gauche et des images de l'oeil droit, le procédé comprenant les étapes consistant à :

calculer une quantité de déphasage horizontal ΔH d'une image de lutin bidimensionelle (A) fournie par le logiciel de jeu vidéo d'origine, l'image de lutin ayant la priorité pour l'affichage mais n'ayant pas de coordonnées de profondeur attribuées ;

et produire à partir de l'image de lutin (A) une image de lutin de l'oeil gauche et une image de lutin de l'oeil droit dont les phases sont décalées l'une par rapport à l'autre dans le sens horizontal, les quantités de déphasage horizontal des deux images correspondant à la quantité de déphasage calculée ΔH, dans lequel

ladite quantité de déphasage horizontal ΔH est calculée exclusivement sur la base de la priorité pour l'affichage attribuée à l'image de lutin (A).

FIG. 1

FIG. 2

S3

S2

S1

S0

low

high priority for display

FIG. 3

ROM CARTRIDGE — 20

10

CPU — 11

VDP
(Video Display Processor) — 13

EL — ER

14

12

30

EP 0 717 373 B1

FIG. 4

FIG. 5

FIG 6.

40L      40L                 40L

| LEFT EYE IMAGE | RIGHT EYE IMAGE | LEFT EYE IMAGE | RIGHT EYE IMAGE | · · · · · · · · · | LEFT EYE IMAGE | RIGHT EYE IMAGE |

40R     40R                40R

FIG. 7

## FIG 8.

ORIGINAL POSITION

POSITION OF LEFT EYE IMAGE

POSITION OF RIGHT EYE IMAGE

## FIG. 9

ORIGINAL IMAGE

LEFT EYE IMAGE

RIGHT EYE IMAGE